(19) Europäisches Patentamt
European Patent Office
Office européen des brevets

(11) **EP 3 817 110 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **19206896.3**

(22) Anmeldetag: **04.11.2019**

(51) Internationale Patentklassifikation (IPC):
*H01M 8/10* (2016.01)    *H01M 4/86* (2006.01)
*H01M 4/88* (2006.01)    *H01M 4/92* (2006.01)

(52) Gemeinsame Patentklassifikation (CPC):
**H01M 4/8605; H01M 4/8663; H01M 4/8803;**
**H01M 4/8817; H01M 4/885; H01M 4/926;**
H01M 2008/1095; Y02E 60/50

(54) **KATALYSATOR HOHER STABILITÄT FÜR EINE ELEKTROCHEMISCHE ZELLE**

HIGH STABILITY CATALYST FOR AN ELECTROCHEMICAL CELL

CATALYSEUR DE HAUTE STABILITÉ POUR UNE CELLULE ÉLECTROCHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.05.2021 Patentblatt 2021/18**

(73) Patentinhaber: **Heraeus Deutschland GmbH & Co. KG**
**63450 Hanau (DE)**

(72) Erfinder:
• **Hasché, Frédéric**
**63450 Hanau (DE)**
• **Nesselberger, Markus**
**63450 Hanau (DE)**
• **Kuwertz, Nadia**
**63450 Hanau (DE)**
• **Eweiner, Florian**
**63450 Hanau (DE)**
• **Stoica, Leonard**
**63450 Hanau (DE)**
• **Michaud-Bernlochner, Julie**
**63450 Hanau (DE)**
• **Ramirez Castro, Claudia**
**63450 Hanau (DE)**
• **Samuelis, Dominik**
**63450 Hanau (DE)**

(74) Vertreter: **Maiwald GmbH**
**Elisenhof**
**Elisenstraße 3**
**80335 München (DE)**

(56) Entgegenhaltungen:
EP-A1- 1 760 810    DE-A1-102010 049 249
US-A1- 2009 208 780

**Beschreibung**

Die vorliegende Erfindung betrifft einen Katalysator, der in einer elektrochemischen Zelle, insbesondere einer PEM-Brennstoff- oder PEM-Elektrolysezelle verwendet werden kann und eine hohe Stabilität aufweist.

Edelmetalle wie z.B. Platin (als elementares Metall oder in Form einer Legierung) werden als Katalysator in Polymerelektrolyt-Brennstoffzellen ("PEM"-Brennstoffzellen) verwendet. Dabei kann sowohl die Wasserstoffoxidation an der Anode wie auch die Sauerstoffreduktion an der Kathode durch Platin oder ein anderes geeignetes Edelmetall katalysiert werden, siehe z.B. "PEM Fuel Cell Electrocatalysts and Catalyst Layers", Hrsg.: J. Zhang, 2008, Springer Verlag, Seiten 110-115 hinsichtlich der kathodischen Sauerstoffreduktion ("*ORR*", "*oxygen reduction reaction*") und Seiten 149-156 hinsichtlich der anodischen Wasserstoffoxidation ("*HOR*", "*hydrogen oxidation reaction*").

Um eine möglichst hohe elektrochemisch aktive Oberfläche zu generieren, wird das katalytisch aktive Platin-haltige Material häufig in Form von Nanopartikeln auf einem Trägermaterial bereitgestellt. Kohlenstoffmaterialien werden häufig als Träger verwendet.

Die als Träger verwendeten Kohlenstoffmaterialien können porös sein. Herstellungsverfahren, mit denen sich die Porosität gezielt einstellen lässt, sind dem Fachmann bekannt. Bei einer auch als "*Nanocasting*" bezeichneten Herstellungsmethode wird beispielsweise zunächst ein poröser anorganischer Feststoff (auch als Templat oder Wirtsstruktur bezeichnet) vorgelegt und mit einem organischen Precursor infiltriert. Durch eine thermische Behandlung wird der in den Poren des anorganischen Templats vorliegende organische Precursor carbonisiert und es bildet sich ein carbonisiertes Kohlenstoffmaterial, das gegenüber dem organischen Precursor einen höheren Anteil an Kohlenstoffatomen hat. Anschließend wird das anorganische Templat entfernt, beispielsweise durch Einwirkung einer Säure oder Base, und das carbonisierte Kohlenstoff-reiche Material wird freigelegt. Die "Nanocasting"-Methode und die möglichen Verwendungen der damit hergestellten porösen Kohlenstoffmaterialien (z.B. als Trägermaterial katalytisch aktiver Metalle) werden beispielsweise von J. Yu, Accounts of Chemical Research, 46, 2013, S. 1397-1406; P. Strasser et al., ChemPhysChem, 13, 2012, S. 1385-1394; und Ch. Neumann et al., Journal of Materials Chemistry, 22, 2012, S. 10787-10794, beschrieben.

Unter den Betriebsbedingungen einer PEM-Brennstoffzelle kann es zu einer oxidativen Korrosion des als Träger fungierenden Kohlenstoffmaterials und in Folge dieser Schädigung des Trägermaterials zu einem Leistungseinbruch der Brennstoffzelle kommen.

Beispielsweise kann während des Betriebs einer PEM-Brennstoffzelle eine Verarmung des Treibstoffes Wasserstoff (Oxidationspartner der Gesamtreaktion) auf der Anodenseite eintreten. Dieses Phänomen ist als Wasserstoffverarmung bekannt und führt zur Umpolung der Elektrodenspannung (engl.: "*fuel cell reversal*"). Dadurch wird Kohlenstoff oxidiert (C zu $CO_2$) und es kommt schließlich zum Zusammenbruch der porösen Elektrodenstruktur sowie zum Leistungseinbruch. Auch beim Anfahren bzw. Herunterfahren der Brennstoffzelle ("Start Up/Shut Down") kann es auf der Kathodenseite zu einem oxidativen Abbau der Kohlenstoffmaterials kommen.

Es ist bekannt, dass die Korrosionsstabilität eines Kohlenstoffmaterials in einer PEM-Brennstoffzelle, insbesondere auch im Fall einer Umpolung der Elektrodenspannung oder beim Anfahren bzw. Herunterfahren der Brennstoffzelle, verbessert werden kann, wenn das Kohlenstoffmaterial graphitiert wurde, siehe z.B. C. Zhang et al., Catalysts, 2016, 6, 197, doi: 10.3390/catal6120197; und C. Liu et al., J. Mater. Chem. A, 2017, 5, S. 1808-1825.

Unter einem graphitierten Kohlenstoff ("*graphitized carbon*") wird ein Kohlenstoffmaterial verstanden, das als Resultat einer thermischen Behandlung eines graphitierbaren Ausgangsmaterials bei hoher Temperatur zumindest teilweise eine Graphitstruktur aufweist, siehe z.B. H.B. Böhm et al., Pure & Appl. Chem., 67, 1995, S. 473-506. Die Graphitstruktur zeigt sich beispielsweise durch entsprechende Beugungsreflexe in einem Röntgendiffraktogramm.

Die Graphitierung kann jedoch zu einer Reduzierung der spezifischen Oberfläche des Kohlenstoffmaterials und/oder der Haftfestigkeit der Platinpartikel auf der Kohlenstoffoberfläche führen.

EP 2 954 951 A1 beschreibt ein Verfahren zur Herstellung eines Edelmetallbeladenen porösen graphitierten Kohlenstoffmaterials. In diesem Verfahren wird zunächst ein als Templat fungierender poröser anorganischer Feststoff vorgelegt und dessen Poren werden anschließend mit einer flüssigen organischen Ausgangsverbindung ("Precursor") imprägniert. Nach einer Carbonisierung der organischen Ausgangsverbindung unter Bildung eines carbonisierten Kohlenstoffmaterials wird das anorganische Templat entfernt. Das freigelegte carbonisierte Kohlenstoffmaterial wird durch eine thermische Behandlung graphitiert und dieses graphitierte Kohlenstoffmaterial wird dann in einer oxidierenden Atmosphäre einer Aktivierungsbehandlung unterzogen. Die Aktivierungsbehandlung erfolgt an Luft bei einer Temperatur von 400-500°C. Das aktivierte graphitierte Kohlenstoffmaterial fungiert als Träger für Platinmetallpartikel. Die geträgerte Zusammensetzung kann als Katalysator in einer elektrochemischen Zelle (z.B. einer Brennstoffzelle) verwendet werden.

US 2009/208780 A1 beschreibt ein Verfahren zur Herstellung eines graphitierten Kohlenstoffmaterials mit hoher spezifischer Oberfläche, wobei zunächst ein Kohlenstoffausgangsmaterial graphitiert wird und dieser graphitierte Kohlenstoff einer oxidativen Behandlung unterzogen wird, so dass ein graphitierter Kohlenstoff hoher spezifischer Oberfläche erhalten wird.

DE 10 2010 049 249 A1 beschreibt ein Verfahren zur Herstellung eines porösen Kohlenstoffmaterials. Dieses Verfahren umfasst (a) das Bereitstellen einer porösen Kohlenstoffstruktur, (b) das Infiltrieren der Kohlenstoffstruktur mit einer Vorläufersubstanz für graphitisierbaren Kohlenstoff, (c) das Carbonisieren der Vorläufersubstanz unter Bildung des Kohlenstofferzeugnisses.

EP 1 760 810 A1 beschreibt eine Membran-Elektroden-Einheit für eine Brennstoffzelle. Die katalysatorhaltige Schicht der Membran-Elektroden-Einheit enthält als Träger beispielsweise ein wasserabweisendes graphitiertes Kohlenstoffmaterial.

Eine Aufgabe der vorliegenden Erfindung ist die Bereitstellung eines Katalysators mit hoher Korrosionsstabilität unter den Betriebsbedingungen einer PEM-Brennstoff- oder PEM-Elektrolysezelle. Bei der Verwendung in einer PEM-Brennstoffzelle sollte der Katalysator auch bei Wasserstoffverarmung auf der Anodenseite oder beim Anfahren bzw. Herunterfahren ("Start Up/Shut Down") auf der Kathodenseite eine hohe Korrosionsstabilität zeigen. Die hohe Stabilität sollte möglichst nicht unter Inkaufnahme einer reduzierten Aktivität, z.B. einer niedrigen elektrochemisch aktiven Oberfläche (EASA), erzielt werden.

Gelöst wird die Aufgabe durch ein Verfahren zur Herstellung eines Katalysators für eine elektrochemische Zelle, wobei

- ein graphitiertes poröses Kohlenstoffmaterial behandelt wird mit

    - einem sauerstoffhaltigen Plasma oder
    - einem wässrigen Medium, das ein Oxidationsmittel enthält, wobei die Temperatur des wässrigen Mediums bei der Behandlung des graphitierten porösen Kohlenstoffmaterials 70°C bis 100°C beträgt,

- mindestens eine Edelmetallverbindung auf dem behandelten Kohlenstoffmaterial abgeschieden wird, so dass ein imprägniertes Kohlenstoffmaterial erhalten wird,
- das imprägnierte Kohlenstoffmaterial mit einem Reduktionsmittel in Kontakt gebracht wird, so dass die Edelmetallverbindung zu einem metallischen Edelmetall reduziert und ein Edelmetall-beladenes Kohlenstoffmaterial erhalten wird.

Graphitierte poröse Kohlenstoffmaterialien sind dem Fachmann bekannt und lassen sich durch bekannte Verfahren herstellen oder sind kommerziell erhältlich. Beispielsweise wird ein poröses graphitierbares Kohlenstoffmaterial einer thermischen Behandlung (z.B. bei einer Temperatur im Bereich von 1400°C bis 3000°C) unterzogen, so dass sich in dem Kohlenstoffmaterial Bereiche mit Graphitstruktur ausbilden.

In einer Ausführungsform weist das graphitierte poröse Kohlenstoffmaterial beispielsweise einen Graphitierungsgrad von mindestens 60%, bevorzugter mindestens 63% auf. Beispielsweise liegt der Graphitierungsgrad im Bereich von 60-90%, bevorzugter 63-80%.

Wie dem Fachmann bekannt und beispielsweise in EP 2 954 951 A1 beschrieben wird, lässt sich der Graphitierungsgrad g (in %) anhand der folgenden Formel (1) bestimmen:

$$g = [(344\ pm - d_{002}) / (344\ pm - 335,4\ pm)] \times 100 \qquad (1)$$

wobei $d_{002}$ der Graphit-Basalebenenabstand ist, der über die bekannte Bragg-Gleichung anhand des Beugungsreflexes der (002)-Ebene im Pulverdiffraktogramm des graphitierten Kohlenstoffmaterials bestimmt wird.

In einer weiteren Ausführungsform weist das graphitierte poröse Kohlenstoffmaterial beispielsweise ein La/Lc-Verhältnis von mindestens 0,15 auf. Bevorzugt beträgt das Verhältnis von La zu Lc 0,15 bis 3,0, bevorzugter 0,15 bis 1,5 oder 0,15 bis 0,5. Wie dem Fachmann bekannt ist, sind La und Lc ein Maß für die mittleren Kristallitgrößen in paralleler Richtung (La) und in senkrechter Richtung (Lc) zu den Basalebenen der Graphitstruktur. Wie nachfolgend noch eingehender beschrieben wird, erfolgt die Bestimmung von La und Lc in bekannter Weise durch Pulverdiffraktometrie und Anwendung der Scherrer-Gleichung. Die Bestimmung des La-Werts erfolgt anhand des Beugungsreflexes der (100)-Ebene ("100-Beugungsreflex") und die Bestimmung des Lc-Werts erfolgt anhand des Beugungsreflexes der (002)-Ebene ("002-Beugungsreflex") im Pulverdiffraktogramm des graphitierten Kohlenstoffmaterials.

Das graphitierte poröse Kohlenstoffmaterial kann beispielsweise erhalten werden, indem eine organische Ausgangsverbindung (organischer "Precursor") zunächst einer Carbonisierung unter Erhalt eines carbonisierten Kohlenstoffmaterials unterzogen wird und dieses carbonisierte Kohlenstoffmaterial anschließend graphitiert wird. Wie dem Fachmann bekannt ist, wird bei einer Carbonisierung ein organischer Precursor in einer inerten Atmosphäre thermisch behandelt (Pyrolyse), wobei als Carbonisierungsprodukt ein Feststoff erhalten wird, der im Vergleich zum Precursor einen höheren Kohlenstoffgehalt aufweist. Die Carbonisierung findet beispielsweise bei einer Temperatur von 500°C bis 1200°C, bevorzugter 500°C bis 900°C oder 700°C bis 900°C statt. Wie nachfolgend noch eingehender beschrieben, kann die Carbonisierung des organischen Precursors beispielsweise in den Poren eines anorganischen Templatmaterials stattfinden. Für diesen Fall kann es bevorzugt sein, dass die Carbonisierungstemperatur 500°C bis 900°C oder 700°C bis 900°C beträgt, um eine Reaktion zwischen dem anorganischen Templatmaterial und dem Carbonisierungsprodukt zu vermeiden. Die Graphitierung findet beispielsweise bei einer Temperatur im Bereich von 1400°C bis 3000°C, bevorzugter 2000°C bis 2500°C statt.

Geeignete organische Ausgangsverbindungen, die über eine Carbonisierung und Graphitierung in ein graphitiertes Kohlenstoffmaterial überführt werden können, sind dem Fachmann bekannt. Beispielsweise ist die organische Ausgangsverbindung eine Polyhydroxyverbindung oder ein Pech.

Die Polyhydroxyverbindung ist beispielsweise ein Saccharid, ein Polyvinylalkohol oder ein Phenolharz. Als Saccharid kann beispielsweise ein Monosaccharid, ein Disaccharid, ein Oligosaccharid (3-10 Saccharideinheiten) oder ein Polysaccharid (z.B. Stärke) verwendet werden.

Peche sind Rückstände bei der Destillation von Teer. Je nach Herkunft kann beispielsweise zwischen Kohlenteer-Pechen, Holzteerpechen, Petroleum-Pechen, Tallöl-Pechen oder Fischöl-Pechen unterschieden werden. Peche sind im Allgemeinen thermoplastische Stoffe.

In einer bevorzugten Ausführungsform ist das graphitierte poröse Kohlenstoffmaterial durch ein Verfahren erhältlich oder wird das graphitierte poröse Kohlenstoffmaterial durch ein Verfahren hergestellt, das folgende Schritte umfasst:

- ein poröser anorganischer Feststoff wird mit einer organischen Ausgangsverbindung imprägniert,
- die in dem porösen anorganischen Feststoff vorliegende organische Ausgangsverbindung wird carbonisiert, so dass ein carbonisiertes Kohlenstoffmaterial erhalten wird,
- der anorganische Feststoff wird entfernt,
- das durch die Entfernung des anorganischen Feststoffs freigelegte carbonisierte Kohlenstoffmaterial wird graphitiert.

Hinsichtlich geeigneter organischer Ausgangsverbindungen kann auf die obigen Ausführungen verwiesen werden. In einer bevorzugten Ausführungsform wird als organische Ausgangsverbindung, mit dem der poröse anorganische Feststoff imprägniert wird, eine Polyhydroxyverbindung verwendet. Im Rahmen der vorliegenden Erfindung hat sich gezeigt, dass eine weitere Verbesserung der oxidativen Stabilität und der elektrochemisch aktiven Oberfläche der Katalysatorzusammensetzung realisiert werden kann, wenn das graphitierte poröse Kohlenstoffmaterial unter Verwendung einer Polyhydroxyverbindung (z.B. eines Saccharids, eines Polyvinylalkohols oder eines Phenolharzes) hergestellt wurde.

Geeignete poröse Feststoffe, die als Templat im Nanocasting verwendet werden können, sind dem Fachmann bekannt. Beispielsweise ist der poröse Feststoff $SiO_2$, $Al_2O_3$ oder ein Übergangsmetalloxid. Der poröse anorganische Feststoff kann beispielsweise aus miteinander verbundenen Partikeln bestehen, wobei die Hohlräume zwischen den Partikeln das Porenvolumen für die Aufnahme des organischen Precursor darstellen. Anorganische Template, die für das Nanocasting verwendet werden können, werden beispielsweise von J. Yu, Accounts of Chemical Research, 46, 2013, S. 1397-1406; P. Strasser et al., ChemPhysChem, 13, 2012, S. 1385-1394; und Ch. Neumann et al., Journal of Materials Chemistry, 22, 2012, S. 10787-10794; sowie in EP 2 954 951 A1 und EP 2 528 879 B1 beschrieben.

Für den Imprägnierschritt liegt die organische Ausgangsverbindung bevorzugt in flüssiger Form (z.B. in geschmolzener oder gelöster Form) vor. Der anorganische poröse Festkörper wird mit der flüssigen organischen Ausgangsverbindung kontaktiert, so dass die organische Ausgangsverbindung in die Poren des anorganischen Festkörpers diffundieren kann.

Hinsichtlich einer geeigneten Carbonisierungstemperatur der in dem anorganischen porösen Festkörper vorliegenden organischen Ausgangsverbindung kann auf die obigen Ausführungen verwiesen werden. Die Carbonisierung findet beispielsweise bei einer Temperatur von 500°C bis 1200°C, bevorzugter 500°C bis 900°C oder 700°C bis 900°C statt. Die Carbonisierung findet in einer inerten Gasatmosphäre statt, zum Beispiel unter Argon oder bevorzugt unter Stickstoff. Als Carbonisierungsprodukt wird ein Feststoff erhalten wird, der im Vergleich zur organischen Ausgangsverbindung einen höheren Kohlenstoffgehalt aufweist. Um das Risiko einer Reaktion zwischen dem anorganischen Feststoff und dem carbonisierten Kohlenstoffmaterial möglichst gering zu halten, wird bevorzugt bei 500°C bis 900°C oder 700°C bis 900°C carbonisiert.

Methoden, mit denen sich der anorganische Feststoff entfernen lässt, ohne das carbonisierte Kohlenstoffmaterial signifikant zu beeinträchtigen, sind dem Fachmann bekannt. Beispielsweise wird der anorganische Feststoff durch Einwirkung einer Säure oder einer Base entfernt.

Hinsichtlich einer geeigneten Graphitierungstemperatur des durch die Entfernung des anorganischen Festkörpers freigelegten carbonisierten Kohlenstoffmaterials kann auf die obigen Ausführungen verwiesen werden. Die Graphitierung findet beispielsweise bei einer Temperatur im Bereich von 1400°C bis 3000°C, bevorzugter 2000°C bis 2500°C statt.

Geeignete graphitierte poröse Kohlenstoffmaterialien sind auch kommerziell erhältlich, beispielsweise unter der Bezeichnung Porocarb® von Heraeus.

Das poröse graphitierte Kohlenstoffmaterial weist beispielsweise eine spezifische BET-Oberfläche im Bereich von 5 m$^2$/g bis 200 m$^2$/g, bevorzugter 10 m$^2$/g bis 100 m$^2$/g oder 30-80 m$^2$/g auf.

Das poröse graphitierte Kohlenstoffmaterial weist beispielsweise ein Porenvolumen von 0,7 cm$^3$/g bis 3,5 cm$^3$/g, bevorzugter 0,9 cm$^3$/g bis 2,5 cm$^3$/g auf. Beispielsweise entfallen mindestens 75% des Porenvolumens auf Makroporen mit einem Porendurchmesser im Bereich von 100 nm bis 5000 nm.

In einer bevorzugten Ausführungsform weist das poröse graphitierte Kohlenstoffmaterial ein La/Lc-Verhältnis im Bereich von 0,15 bis bis 0,5 und eine spezifische BET-Oberfläche im Bereich von 30-80 m$^2$/g auf.

In dem Verfahren der vorliegenden Erfindung wird das oben beschriebene graphitierte poröse Kohlenstoffmaterial mit einem sauerstoffhaltigen Plasma oder einem wässrigen Medium, das ein Oxidationsmittel enthält, behandelt.

Das Plasma ist beispielsweise ein Niederdruckplasma oder ein Normaldruck- bzw. Atmosphärendruckplasma. Bei einem Niederdruckplasma wird für die Erzeugung des Plasmas ein Gas mit einem relativ geringen Druck verwendet, z.B. $\leq$ 10 mbar oder sogar $\leq$ 1 mbar. Bei einem Normaldruckplasma erfolgt die Plasmaerzeugung etwa bei Atmosphärendruck (1 bar +/- 0,1 bar).

Das für die Erzeugung des sauerstoffhaltigen Plasmas verwendete Gas enthält Sauerstoff (O$_2$) oder besteht sogar aus Sauerstoff. Neben Sauerstoff kann das sauerstoffhaltige Gas beispielsweise noch ein oder mehrere inerte gasförmige Komponenten enthalten. Das Sauerstoff-haltige Gas, das für die Plasmaerzeugung verwendet wird, ist beispielsweise Luft oder mit O$_2$ angereicherte Luft. Es kann beispielsweise auch O$_2$ im Gemisch mit einem oder mehreren Edelgasen verwendet werden. Bevorzugt enthält das für die Erzeugung des sauerstoffhaltigen Plasmas verwendete Gas Sauerstoff (O$_2$) in einer Konzentration von mindestens 20 Vol%, bevorzugter mindestens 95 Vol%.

Das Plasma wird beispielsweise mit einer Leistung von 50 W bis 250 W betrieben.

Das graphitierte poröse Kohlenstoffmaterial wird beispielsweise für eine Zeitdauer von 10 Minuten bis 60 Minuten mit dem sauerstoffhaltigen Plasma behandelt.

Das in dem wässrigen Medium vorliegende Oxidationsmittel ist beispielsweise HNO$_3$, H$_2$SO$_4$, ein Permanganat (z.B. KMnO$_4$), H$_2$O$_2$, oder ein Gemisch aus mindestens zwei der vorstehend genannten Oxidationsmittel (z.B. ein Gemisch aus HNO$_3$ und H$_2$SO$_4$).

Das Oxidationsmittel liegt in dem wässrigen Medium beispielsweise in einer Konzentration von mindestens 20 Gew%, z.B. 20 Gew% bis 80 Gew% vor.

In einer bevorzugten Ausführungsform ist das Oxidationsmittel HNO$_3$. Bei dem HNO$_3$-haltigen wässrigen Medium handelt es sich beispielsweise um konzentrierte Salpetersäure. Der HNOa-Gehalt der handelsüblichen konzentrierten Salpetersäure beträgt bekannterweise etwa 69 Gew%.

Die Temperatur des wässrigen Mediums bei der Behandlung des graphitierten porösen Kohlenstoffmaterials beträgt 70°C bis 100°C, bevorzugter 80°C bis 95°C.

Das graphitierte poröse Kohlenstoffmaterial wird beispielsweise für eine Zeitdauer von 30 Minuten bis 180 Minuten mit dem wässrigen oxidationsmittelhaltigen Medium behandelt. Im Anschluss kann es mit Wasser gewaschen und getrocknet werden.

Das mit dem sauerstoffhaltigen Plasma oder dem oxidationsmittelhaltigen wässrigen Medium behandelte graphitierte poröse Kohlenstoffmaterial weist beispielsweise einen Sauerstoffgehalt, bestimmt durch Röntgenphotoelektronenspektroskopie (XPS), im Bereich von 0,1 bis 10 at%, bevorzugt 0,5 bis 5 at% auf. Im Raman-Spektrum weist das mit dem sauerstoffhaltigen Plasma oder dem oxidationsmittelhaltigen wässrigen Medium behandelte graphitierte poröse Kohlenstoffmaterial beispielsweise eine G-Bande und eine D-Bande auf, deren Intensitätsverhältnis I$_G$/I$_D$ mindestens 2,7, bevorzugter mindestens 3,3 beträgt. Beispielsweise liegt I$_G$/I$_D$ im Bereich von 2,7 bis 4,2, bevorzugter 3,3 bis 3,9. Wie dem Fachmann bekannt ist, erscheint die G-Bande bei etwa 1582 cm$^{-1}$ und die D-Bande erscheint bei etwa 1350 cm$^{-1}$.

Wie oben ausgeführt, wird auf dem Kohlenstoffmaterial, das zuvor mit dem sauerstoffhaltigen Plasma oder dem wässrigen oxidationsmittelhaltigen Medium behandelt wurde, eine Edelmetallverbindung abgeschieden, so dass ein imprägniertes Kohlenstoffmaterial erhalten wird.

Das Edelmetall ist bevorzugt ein Metall der Platinmetallgruppe, insbesondere Platin.

In einer bevorzugten Ausführungsform erfolgt die Abscheidung der Edelmetallverbindung auf dem Kohlenstoffmaterial in einem wässrigen Medium.

Platinverbindungen, die für das Imprägnieren eines Trägermaterials (bevorzugt in wässrigem Medium) und eine danach erfolgende Reduktion zu metallischem Platin eingesetzt werden können, sind dem Fachmann bekannt.

Beispielsweise ist die Platinverbindung eine Pt(II)- oder eine Platin(IV)-Verbindung, z.B. ein Pt(II)- oder Pt(IV)-Salz oder eine Pt(II)- oder Pt(IV)-Komplexverbindung oder eine Pt-Organometallverbindung. Als beispielhafte Platinverbindungen können Hexachloroplatinsäure oder ein Salz dieser Säure, ein Platinnitrat, ein Platinhalogenid, Platinacetylacetonat oder Platinoxalat oder eine Mischung aus mindestens zwei dieser Verbindungen genannt werden.

Sofern die mit dem erfindungsgemäßen Verfahren zu erzeugenden metallischen Platinpartikel noch ein Legierungselement enthalten sollen, können zusätzlich zu der Platinverbindung noch eine oder mehrere Metallverbindungen dem wässrigen Medium zugegeben werden. In diesem Fall wird das als Träger fungierende Kohlenstoffmaterial nicht nur mit der Platinverbindung, sondern auch mit der zusätzlichen Metallverbindung imprägniert. Bei dieser weiteren Metallverbindung kann es sich beispielsweise um ein Edelmetall oder ein sonstiges Übergangsmetall handeln. Diese weitere Verbindung kann beispielsweise ein Salz, ein Komplex oder eine Organometallverbindung sein.

Für den Imprägnierschritt können das Kohlenstoffmaterial und die darauf abzuscheidende Platinverbindung gleichzeitig oder auch nacheinander in das wässrige Medium eingebracht werden. Beispielsweise wird zunächst das Kohlenstoffmaterial in dem wässrigen Medium dispergiert und anschließend wird die Platinverbindung (z.B. in Form einer wässrigen Lösung) zudosiert.

Geeignete Bedingungen für das Imprägnieren des Kohlenstoffmaterials mit der Platinverbindung sind dem Fachmann bekannt. Bevorzugt wird das wässrige Medium während des Imprägnierschritts kontinuierlich gerührt.

Der pH-Wert des wässrigen Mediums während des Imprägnierschritts kann über einen breiten Bereich variiert werden. Beispielsweise weist das wässrige Medium während des Imprägnierschritts einen pH-Wert von maximal 9,5; bevorzugter maximal 6,0 auf.

Während des Imprägnierschritts beträgt die Temperatur des wässrigen Mediums beispielsweise 20°C bis 95°C, bevorzugter 40°C bis 90°C oder 60°C bis 80°C, insbesondere 50°C bis 70°C.

Das Masseverhältnis von dem in der Platinverbindung vorliegenden Platin zum Kohlenstoffmaterial beträgt beispielsweise 1/10 - 8/10, bevorzugter 2/10 - 7/10.

Das Kohlenstoffmaterial liegt in dem wässrigen Medium beispielsweise in einer Menge von 0,05 Gew% bis 2,5 Gew%, bevorzugter 0,1 Gew% bis 2,0 Gew% vor.

Die Dauer des Imprägnierschritts wird so gewählt, dass sich die Platinverbindung in ausreichender Menge auf dem als Trägermaterial fungierenden Kohlenstoffmaterial abscheiden kann. Eine geeignete Zeitdauer kann der Fachmann anhand von Routineversuchen ermitteln.

Während des Imprägnierschritts wird die Platinverbindung auf der Oberfläche des Kohlenstoffmaterials adsorbiert. Da das Kohlenstoffmaterial porös ist, handelt es sich dabei insbesondere um eine innere, d.h. innerhalb der Poren liegende Oberfläche. Als Ergebnis des Imprägnierschritts wird ein imprägniertes (d.h. mit der Platinverbindung beladenes) Kohlenstoffmaterial erhalten.

Wie oben erwähnt, wird das imprägnierte Kohlenstoffmaterial mit einem Reduktionsmittel in Kontakt gebracht, so dass die Edelmetallverbindung zu einem metallischen Edelmetall reduziert und ein Edelmetall-beladenes Kohlenstoffmaterial erhalten wird.

Wie oben bereits erwähnt, kann das metallische Edelmetall ein elementares Edelmetall (z.B. elementares Platin) oder eine Edelmetall-Legierung (z.B. eine Pt-Legierung) sein, wobei das Edelmetall im Fall einer Legierung bevorzugt die Komponente darstellt, die in der größten Konzentration, in Gew%, in der Legierung vorliegt.

Bevorzugt erfolgt der Reduktionsschritt in einem wässrigen Medium.

Für den Reduktionsschritt weist das wässrige Medium beispielsweise einen pH-Wert im Bereich von 1,5-7,0 auf.

Durch das Inkontaktbringen mit dem Reduktionsmittel bildet sich ein Edelmetall, bevorzugt metallisches Platin, auf dem Kohlenstoffmaterial, beispielsweise in Form von Partikeln. Das mit dem erfindungsgemäßen Verfahren hergestellte Edelmetall-beladene Kohlenstoffmaterial enthält das Edelmetall (bevorzugt Platin) beispielsweise in einer Menge von 5 Gew% bis 60 Gew%, bevorzugter 15 Gew% bis 50 Gew% oder 25 Gew% bis 50 Gew%.

Als Reduktionsmittel kann beispielsweise Ameisensäure, ein Metallborhydrid (z.B. ein Alkalimetallborhydrid wie $NaBH_4$ und $LiBH_4$), ein Alkalimetallhydrid (z.B. Natriumhydrid), Wasserstoff ($H_2$), ein Metallthiosulfat (z.B. ein Alkalimetallthiosulfat wie $NaS_2O_3$), ein Aldehyd (z.B. Formaldehyd), ein Alkohol (z.B. ein Monohydroxyalkohol wie Isopropanol), Hydrazin, Hydrazinhydrat, Hydrazinhydrochlorid oder Ascorbinsäure oder ein Gemisch aus mindestens zwei dieser Reduktionsmittel eingesetzt werden.

Eine geeignete Temperatur für den Reduktionsschritt (d.h. eine geeignete Temperatur des wässrigen Mediums während des Reduktionsschritts) kann der Fachmann in Abhängigkeit von dem verwendeten Reduktionsmittel aufgrund seines Fachwissens bestimmen. Für den Reduktionsschritt liegt die Temperatur des wässrigen Mediums beispielsweise im Bereich von 20°C bis 95°C, bevorzugter 30°C bis 90°C, noch bevorzugter 50°C bis 80°C, insbesondere 50°C bis 70°C.

Nach erfolgter Reduktion der Edelmetallverbindung zum Edelmetall (wobei es sich um ein elementares Edelmetall oder eine Edelmetalllegierung handeln kann), kann die Katalysatorzusammensetzung über herkömmliche Methoden aus dem wässrigen Medium isoliert und einer Trocknung unterzogen werden.

Mit dem oben beschriebenen erfindungsgemäßen Verfahren ist ein Katalysator für eine elektrochemische Zelle erhältlich.

Der Katalysator enthält ein graphitiertes Kohlenstoffmaterial und ein auf diesem Kohlenstoffmaterial vorliegendes Edelmetall, insbesondere Platin.

Hinsichtlich bevorzugter Eigenschaften des graphitierten Kohlenstoffmaterials kann auf die oben gemachten Ausführungen verwiesen werden.

Der Katalysator ist beispielsweise über ein Verfahren erhältlich, das folgende Schritte umfasst:

- ein poröser anorganischer Feststoff wird mit einer Polyhydroxyverbindung, insbesondere einem Saccharid, einem Polyvinylalkohol oder einem Phenolharz, imprägniert,

- die in dem porösen anorganischen Feststoff vorliegende Polyhydroxyverbindung wird carbonisiert, bevorzugt bei einer Temperatur im Bereich von 500-900°C, so dass ein carbonisiertes Kohlenstoffmaterial erhalten wird,
- der anorganische Feststoff wird entfernt,
- das durch die Entfernung des anorganischen Feststoffs freigelegte carbonisierte Kohlenstoffmaterial wird graphitiert, bevorzugt bei einer Temperatur im Bereich von 1400-3000°C, bevorzugter 2000-2500°C, so dass ein graphitiertes poröses Kohlenstoffmaterial erhalten wird,
- das graphitierte poröse Kohlenstoffmaterial wird mit einem sauerstoffhaltigen Plasma oder einem wässrigen Medium, das ein Oxidationsmittel enthält, behandelt,
- in einem wässrigen Medium wird eine Platinverbindung auf dem behandelten Kohlenstoffmaterial abgeschieden, so dass ein imprägniertes Kohlenstoffmaterial erhalten wird,
- das imprägnierte Kohlenstoffmaterial wird mit einem Reduktionsmittel in Kontakt gebracht, so dass die Platinverbindung zu metallischem Platin reduziert und ein Platin-beladenes Kohlenstoffmaterial erhalten wird.

Nachfolgend sind die in der vorliegenden Erfindung verwendeten Messmethoden angegeben.

Messmethoden

Pulverdiffraktometrie

Der Graphitierungsgrad und die Kristallitgrößen La und Lc wurden durch Pulverdiffraktometrie bestimmt.

Pulverdiffraktometrie wurde auf einem STOE&Cie. Stadi P Diffraktometer in Pulver-Transmissionsgeometrie gemessen. Ein fokussierender Ge-111 Monochromator liefert monochromatische Kupfer $K_{alpha1}$ Röntgenstrahlung mit $\lambda$=1.54060 Å (Generatorparameter: 40kV, 30mA). Einige mg Probenmaterial wurden in einem Achatmörser fein zerkleinert, zwischen Cellophanfolien mit Weißleim fixiert, und in den STOE Transmissionsprobenhalter eingebaut. Der STOE IPPSD Detektor wurde verwendet. Die Proben wurden im Transmissionsprobenhalter in der Ebene senkrecht zum Röntgenstrahl mit 50-150rpm rotiert. Die STOE WinXPOW Software wurde zur Probenaufzeichnung verwendet. Messungen wurden in einem 2theta-Bereich von 8° bis 84° durchgeführt, die Aufnahmezeit betrug 8800 Sekunden. Die 2theta-Schrittweite ist 0.015°.

Graphitierungsgrad

Der Graphitierungsgrad g (in %) wird anhand der folgenden Formel (1) bestimmt:

$$g = [(344\ pm - d_{002}) / (344\ pm - 335,4\ pm)] \times 100 \qquad (1)$$

wobei $d_{002}$ der Graphit-Basalebenenabstand ist, der durch die bekannte Bragg-Gleichung anhand der Beugungslinie der (002)-Ebene im Pulverdiffraktogramm des graphitierten Kohlenstoffmaterials bestimmt wird.

Die dem Fachmann bekannte Bragg-Gleichung lautet folgendermaßen:

$$d = (n * \lambda) / (2 * \sin\Theta)$$

wobei

$\lambda$ die Röntgenwellenlänge ist;
n die Beugungsordung ist und
Θ der Bragg-Winkel ist.

Bestimmung der Kristallitgrößen La und Lc

Die Kristallitgrößen La und Lc wurden ermittelt, indem die Halbwertsbreite (FWHM) der 100 (La, 2theta=42.223°) und 002 (Lc, 2theta=26.382°) Reflexe der hexagonalen Graphitstruktur über einen Peakfit angepasst wurden. Hierfür wurde die STOE crystallinity analysis Software verwendet. Diese Software verwendet die dem Fachmann bekannte Scherrer-Methode bzw. Scherrer-Gleichung. Eine $LaB_6$ Probe wurde zur Ermittlung der instrumentellen Verbreiterung verwendet, diese instrumentelle Verbreiterung wurde vor der Berechnung vom gefitteten FWHM-Wert abgezogen.

Die dem Fachmann bekannte Scherrer-Gleichung lautet folgendermaßen:

$$L = (K * \lambda) / ((\beta - \beta_{inst}) * \cos\Theta)$$

wobei

L die mittlere Kristallitgröße ist,
K ein Formfaktor ist,
$\lambda$ die Röntgenwellenlänge ist,
$\beta$ die Halbwertsbreite ("FWHM") des Reflexes ist,
$\beta_{inst}$ die Halbwertsbreite ("FWHM") des $LaB_6$-Standards ist
$\Theta$ der Bragg-Winkel ist.

Für La und Lc wird jeweils ein Formfaktor von 0,9 verwendet.

Spezifische BET-Oberfläche

Die spezifische BET-Oberfläche wurde mit Stickstoff als Adsorbat bei 77 K gemäß der BET-Theorie bestimmt (Mehrpunkt-Methode, ISO 9277:2010).

Porenvolumen und Porendurchmesserverteilung

Die Bestimmung des Porenvolumens und der Porendurchmesserverteilung erfolgten mit Quecksilberporosimetrie gemäß ISO 15901-1:2016. Es wurde wie folgt gearbeitet: Probenmasse 30 mg; Oberflächenspannung Quecksilber 0,48 N/m; Kontaktwinkel Quecksilber 140,0°; Gerät: Porotec Pascal 140 + 440; Meßmethode: scanning; Startfülldruck 0,0128 MPa; Dilatometer: Pulver, kleines Volumen; Probenvorbereitung: 8h bei 110 °C unter Vakuum.

Gehalt an Edelmetall (z.B. Platin)

Der Edelmetallgehalt wurde über optische Emissionsspektrometrie mit induktiv gekoppeltem Plasma (ICP-OES) bestimmt.

Bestimmung der elektrochemischen aktiven Oberfläche (EASA):

Die elektrochemisch aktive Oberfläche wurde aus der gemessenen Ladung der Wasserstoffunterpotentialabscheidung bestimmt. Dazu dienten die Polarisationskurven in Argon gesättigtem Elektrolyten mit einer Potentialvorschubgeschwindigkeit von 50 mVs$^{-1}$. Die Ladung ergibt sich nach Abzug der elektrochemischen Doppelschichtkapazität aus der Integration des Stroms über die Zeit. Als Umrechnungsfaktor zur Bestimmung der Platinoberfläche wird von 200 $\mu$Ccm$^{-2}$ ausgegangen.

Sauerstoffgehalt

Der Sauerstoffgehalt wird durch Röntgenphotoelektronenspektroskopie (XPS) bestimmt. Die Messungen wurden an einem Röntgenphotoelektronenspektrometer (Gerät PHI 5800 ESCA System) durchgeführt mit einer Röntgenanregung bei 15kV Mg Strahlung (nicht monochromiert) und einer Messdauer von 10 Min. Die Konzentrationsbestimmung beruhte auf Empfindlichkeitsfaktoren von elementaren Standards.

Raman-Spektrum, Intensitätsverhältnis der G- und D-Bande

Von der jeweiligen Probe wurden Ramanspektren an drei unterschiedlichen Messpunkten mit der Laseranregung bei 532 nm, einer Leistung von ca. 1,6 mW (3,2%) und einer Anregungsdauer von 30 sec. registriert. An den registrierten Spektren wurde mit Hilfe der Spektrometersoftware zuerst eine Spektrenglättung (denoise) und anschließend eine Basislinienkorrektur durchgeführt. Die relevanten Banden wurden über eine Dekonvolution (Bandenzerlegung) berechnet.
Anhand der nachfolgenden Beispiele wird die Erfindung eingehender erläutert.

**Beispiele**

**Erfindungsgemäßes Beispiel 1 (EB1)**

In EB1 wurde ein graphitiertes poröses Kohlenstoffmaterial über Nanocasting hergestellt, indem ein poröses $SiO_2$-Templat mit Saccharose imprägniert wurde, die Saccharose carbonisiert wurde, das $SiO_2$-Templat entfernt wurde und das carbonisierte Kohlenstoffmaterial graphitiert wurde.

Behandlung mit sauerstoffhaltigem Plasma

Das graphitierte poröse Kohlenstoffmaterial wurde mit einem sauerstoffhaltigen Plasma behandelt. Für die Plasmaerzeugung wurde reiner Sauerstoff, Druck: 0,3 mbar (Niederdruckplasma); Leistung: 200 W. Die Plasmabehandlung dauerte 30 min.

Abscheiden einer Platinverbindung auf dem Plasma-behandelten Kohlenstoffmaterial

6g des Plasma-behandelten Kohlenstoffmaterials wurden mit 100 ml Wasser aufgeschlämmt, in einen Doppelmantelreaktor gegeben und mit Wasser auf 2 L aufgefüllt. Es wurde gerührt und die Suspension auf 70°C aufgeheizt. Nach einer Haltezeit von 1 Stunde wurden 40 g einer salpetersauren Pt-Nitrat-Lösung (10 Gew% Pt) zudosiert und anschließend unter gleichbleibender Durchmischung und Temperatur 1 Stunde gehalten.

Reduktion zu metallischem Platin

Durch Zugabe von $Na_2CO_3$ wurde der pH-Wert des wässrigen Mediums auf einen Wert von 5,6 eingestellt. Danach erfolgte die Zugabe von Ameisensäure, die als Reduktionsmittel fungierte. Es wurde gerührt und die Temperatur des wässrigen Mediums betrug 70°C. Während der Reduktion wurde die auf dem Kohlenstoffmaterial vorliegende Platinverbindung zu metallischem Platin reduziert. Man erhielt ein mit metallischem Platin beladenes Kohlenstoffmaterial. Nach 0,5 Stunden wurde die Katalysatorzusammensetzung aus dem wässrigen Medium abfiltriert und mit Wasser gewaschen und bei 110°C unter Stickstoffstoffatmosphäre getrocknet. Der Platingehalt der Katalysatorzusammensetzung betrug 40 Gew%.

**Erfindungsgemäßes Beispiel 2 (EB2)**

Bei dem in EB2 verwendeten Träger handelt es sich ebenfalls um ein graphitiertes poröses Kohlenstoffmaterial, das durch Nanocasting hergestellt wurde, indem ein poröses $SiO_2$-Templat mit Saccharose imprägniert wurde, die Saccharose carbonisiert wurde, das $SiO_2$-Templat entfernt wurde und das carbonisierte Kohlenstoffmaterial graphitiert wurde.

Behandlung mit einem Oxidationsmittel-haltigen wässrigen Medium

Das graphitierte poröse Kohlenstoffmaterial wurde bei 70 °C für 180 min in 69 Gew%iger Salpetersäure unter Rühren dispergiert. Nach dem Abtrennen aus der Salpetersäure wurde das behandelte Kohlenstoffmaterial mit Wasser gewaschen und getrocknet.

Abscheiden einer Platinverbindung auf dem behandelten Kohlenstoffmaterial

6g des im Oxidationsmittel-haltigen wässrigen Medium behandelten Kohlenstoffmaterials wurden unter den gleichen Bedingungen wie in Beispiel EB1 mit einer Platinverbindung imprägniert.

Reduktion zu metallischem Platin

Unter den gleichen Bedingungen wie in Beispiel EB1 erfolgte die Reduktion zu metallischem Platin. Der Platingehalt der Katalysatorzusammensetzung betrug 40 Gew%.

**Vergleichsbeispiel 1 (VB1)**

Wie in den erfindungsgemäßen Beispielen EB1 und EB2 wurde das in dem Vergleichsbeispiel VB1 verwendete graphitierte poröse Kohlenstoffmaterial durch Nanocasting hergestellt. Ein poröses $SiO_2$-Templat wurde mit Pech P15 der Firma Rain Carbon Inc. als organischer Precursorverbindung imprägniert, die Precursorverbindung wurde carbonisiert, das SiO$_2$-Templat wurde entfernt und das carbonisierte Kohlenstoffmaterial wurde graphitiert.

Thermische Behandlung an Luft

Das graphitierte poröse Kohlenstoffmaterial wurde einer thermischen Behandlung an Luft bei 430°C für 13 Stunden unterzogen.

Abscheiden einer Platinverbindung auf dem behandelten Kohlenstoffmaterial

6g des an Luft thermisch behandelten behandelten Kohlenstoffmaterials wurden unter den gleichen Bedingungen wie in Beispiel EB1 mit einer Platinverbindung imprägniert.

Reduktion zu metallischem Platin

Unter den gleichen Bedingungen wie in Beispiel EB1 erfolgte die Reduktion zu metallischem Platin. Der Platingehalt der Katalysatorzusammensetzung betrug 40 Gew%.

Untersuchung der Start-Up/Shut-Down-(SUSD)-Zyklenstabilität der in EB1, EB2 und VB1 hergestellten Katalysatorzusammensetzungen:

Mit den in EB1, EB2 und VB1 hergestellten Katalysatorzusammensetzungen wurden Testzellen angefertigt und es wurde die Zellenspannung als Funktion der Anzahl der Start-Up/Shut-Down-Zyklen bestimmt. Die SUSD-Tests wurden wie von Gasteiger et al. in Journal of The Electrochemical Society, 165 (16) F1349-F1357 (2018) beschrieben durchgeführt.
Dabei ergab sich Folgendes:

EB1: 90% der Ursprungsspannung nach 220 SUSD-Zyklen
EB2: 90% der Ursprungsspannung nach 240 SUSD-Zyklen
VB1: 90% der Ursprungsspannung nach 70 SUSD-Zyklen

Die Testzellen mit den in EB1 und EB2 hergestellten Katalysatorzusammensetzungen zeigen gegenüber der Testzelle mit der in VB1 hergestellten Katalysatorzusammensetzung eine wesentlich geringere Abnahme der Zellenspannung als Funktion der SUSD-Zyklenzahl. Dies ist auf die höhere Korrosionsstabilität des Katalysators zurückzuführen.

Tabelle 1:Ergebnisse der SUSD-Tests

|  | Aktivierungsbehandlung | Anzahl der SUSD-Zyklen bei 90% der Ursprungsspannung |
|---|---|---|
| EB1 | Plasma | 220 |
| EB2 | Oxidatives wässriges Medium | 240 |
| VB1 | Luft, 400-500°C | 70 |

**Elektrochemisch aktive Oberfläche (EASA)**

Für die in EB1 und VB1 hergestellten Katalysatorzusammensetzungen wurde jeweils die elektrochemisch aktive Oberfläche bestimmt. Die Ergebnisse sind in Tabelle 2 aufgelistet.

Tabelle 2: Elektrochemisch aktive Oberflächen EASA

|  | Aktivierungsbehandlung | EASA [m$^2$ Pt/g Pt] |
|---|---|---|
| EB1 | Plasma | 49,7 |
| VB1 | Luft, 400-500°C | 33,5 |

Die mit dem erfindungsgemäßen Verfahren hergestellte Katalysatorzusammensetzung weist gegenüber einer Katalysatorzusammensetzung, deren Kohlenstoffträger vor der Edelmetallabscheidung thermisch an Luft behandelt wurde, eine signifikant höhere elektrochemisch aktive Oberfläche auf.

**Patentansprüche**

1. Ein Verfahren zur Herstellung eines Katalysators für eine elektrochemische Zelle, wobei

   - ein graphitiertes poröses Kohlenstoffmaterial behandelt wird mit

     - einem sauerstoffhaltigen Plasma oder
     - einem wässrigen Medium, das ein Oxidationsmittel enthält, wobei die Temperatur des wässrigen Mediums bei der Behandlung des graphitierten porösen Kohlenstoffmaterials 70°C bis 100°C beträgt,

   - mindestens eine Edelmetallverbindung auf dem behandelten Kohlenstoffmaterial abgeschieden wird, so dass ein imprägniertes Kohlenstoffmaterial erhalten wird,
   - das imprägnierte Kohlenstoffmaterial mit einem Reduktionsmittel in Kontakt gebracht wird, so dass die Edelmetallverbindung zu einem metallischen Edelmetall reduziert und ein Edelmetall-beladenes Kohlenstoffmaterial erhalten wird.

2. Das Verfahren nach Anspruch 1, wobei das graphitierte poröse Kohlenstoffmaterial einen Graphitierungsgrad von mindestens 60% aufweist, wobei der Graphitierungsgrad g anhand der folgenden Formel (1) bestimmt wird:

$$g = [(344 \text{ pm} - d_{002}) / (344 \text{ pm} - 335{,}4 \text{ pm})] \times 100 \qquad (1)$$

   wobei $d_{002}$ der Graphit-Basalebenenabstand ist, der durch Pulverdiffraktometrie anhand des Beugungsreflexes der (002)-Ebene bestimmt wird; und/oder das graphitierte poröse Kohlenstoffmaterial ein La/Lc-Verhältnis von mindestens 0,15, bestimmt über Pulverdiffraktometrie, aufweist, wobei La die mittlere Kristallitgröße in paralleler Richtung und Lc die mittlere Kristallitgröße in senkrechter Richtung zu den Basalebenen der Graphitstruktur sind.

3. Das Verfahren nach einem der vorstehenden Ansprüche, wobei das graphitierte poröse Kohlenstoffmaterial eine spezifische BET-Oberfläche, bestimmt mit Stickstoff bei 77 K gemäß ISO 9277:2010, im Bereich von 5 $m^2$/g bis 200 $m^2$/g und/oder ein Porenvolumen, bestimmt durch Quecksilberporosimetrie gemäß ISO 15901-1:2016, im Bereich von 0,7 $cm^3$/g bis 3,5 $cm^3$/g aufweist.

4. Das Verfahren nach einem der vorstehenden Ansprüche, wobei das graphitierte poröse Kohlenstoffmaterial erhältlich ist oder erhalten wird, indem eine Polyhydroxyverbindung durch eine Carbonisierung in ein carbonisiertes Kohlenstoffmaterial überführt wird und das carbonisierte Kohlenstoffmaterial graphitiert wird.

5. Das Verfahren nach Anspruch 4, wobei die Polyhydroxyverbindung ein Saccharid, ein Polyvinylalkohol oder ein Phenolharz ist.

6. Das Verfahren nach Anspruch 4 oder 5, wobei das graphitierte poröse Kohlenstoffmaterial durch ein Verfahren erhältlich ist oder erhalten wird, das folgende Schritte umfasst:

   - ein poröser anorganischer Feststoff wird mit der Polyhydroxyverbindung imprägniert,
   - die in dem porösen anorganischen Feststoff vorliegende Polyhydroxyverbindung wird carbonisiert, so dass ein carbonisiertes Kohlenstoffmaterial erhalten wird,
   - der anorganische Feststoff wird entfernt,
   - das durch die Entfernung des anorganischen Feststoffs freigelegte carbonisierte Kohlenstoffmaterial wird graphitiert.

7. Das Verfahren nach einem der vorstehenden Ansprüche, wobei für die Erzeugung des sauerstoffhaltigen Plasmas ein Gas mit einem Sauerstoffgehalt von mindestens 20 Vol%, bevorzugter mindestens 95 Vol% verwendet wird.

8. Das Verfahren nach einem der Ansprüche 1 bis 6, wobei das in dem wässrigen Medium vorliegende Oxidationsmittel $HNO_3$, $H_2SO_4$, ein Permanganat, $H_2O_2$, oder ein Gemisch aus mindestens zwei der vorstehend genannten Oxidationsmittel ist.

9.  Das Verfahren nach einem der vorstehenden Ansprüche, wobei die Abscheidung der Edelmetallverbindung auf dem behandelten Kohlenstoffmaterial in einem wässrigen Medium erfolgt.

10. Das Verfahren nach einem der vorstehenden Ansprüche, wobei das Edelmetall Platin ist und die Platinverbindung eine Platin(II)- oder eine Platin(IV)-Verbindung ist.

11. Das Verfahren nach einem der vorstehenden Ansprüche, wobei das imprägnierte Kohlenstoffmaterial in einem wässrigen Medium mit dem Reduktionsmittel in Kontakt gebracht wird; und/oder wobei das Reduktionsmittel Ameisensäure, ein Metallborhydrid, ein Alkalimetallhydrid, Wasserstoff ($H_2$), ein Metallthiosulfat, ein Aldehyd, ein Alkohol, Hydrazin, Hydrazinhydrat, Hydrazinhydrochlorid oder Ascorbinsäure oder ein Gemisch aus mindestens zwei dieser Reduktionsmittel ist.

12. Das Verfahren nach einem der vorstehenden Ansprüche, wobei das Edelmetall-beladene Kohlenstoffmaterial das Edelmetall in einer Menge von 5-60 Gew% enthält.

**Claims**

1.  A method for producing a catalyst for an electrochemical cell, wherein

    - a graphitized porous carbon material is treated with

        - an oxygen-containing plasma or
        - an aqueous medium containing an oxidizing agent, wherein the temperature of the aqueous medium during the treatment of the graphitized porous carbon material is 70°C to 100°C,

    - at least one noble metal compound is deposited on the treated carbon material so that an impregnated carbon material is obtained,
    - the impregnated carbon material is brought into contact with a reducing agent so that the noble metal compound is reduced to a metallic noble metal and a noble-metal-loaded carbon material is obtained.

2.  The method according to claim 1, wherein the graphitized porous carbon material has a degree of graphitization of at least 60%, the degree of graphitization g being determined using the following formula (1):

$$g = [(344\ pm - d_{002}) / (344\ pm - 335.4\ pm)] \times 100 \quad (1)$$

    where $d_{002}$ is the graphite basal plane spacing, which is determined by powder diffractometry on the basis of the diffraction reflection of the (002) plane; and/or the graphitized porous carbon material has an La/Lc ratio of at least 0.15, determined by powder diffractometry, where La is the average crystallite size in the parallel direction and Lc is the average crystallite size in the perpendicular direction with respect to the basal planes of the graphite structure.

3.  The method according to any of the preceding claims, wherein the graphitized porous carbon material has a specific BET surface area, determined using nitrogen at 77 K in accordance with ISO 9277:2010, in the range of 5 $m^2$/g to 200 $m^2$/g, and/or has a pore volume, determined by mercury porosimetry in accordance with ISO 15901-1:2016, in the range of 0.7 $cm^3$/g to 3.5 $cm^3$/g.

4.  The method according to any of the preceding claims, wherein the graphitized porous carbon material is obtainable or obtained by a polyhydroxy compound being converted into a carbonized carbon material by carbonization and the carbonized carbon material being graphitized.

5.  The method according to claim 4, wherein the polyhydroxy compound is a saccharide, a polyvinyl alcohol, or a phenolic resin.

6.  The method according to either claim 4 or claim 5, wherein the graphitized porous carbon material is obtainable or obtained by a method comprising the following steps:

    - a porous inorganic solid is impregnated with the polyhydroxy compound,

- the polyhydroxy compound present in the porous inorganic solid is carbonized so that a carbonized carbon material is obtained,
- the inorganic solid is removed,
- the carbonized carbon material exposed by the removal of the inorganic solid is graphitized.

7. The method according to any of the preceding claims, wherein a gas comprising an oxygen content of at least 20 vol.%, more preferably at least 95 vol.%, is used for the generation of the oxygen-containing plasma.

8. The method according to any of claims 1 to 6, wherein the oxidizing agent present in the aqueous medium is $HNO_3$, $H_2SO_4$, a permanganate, $H_2O_2$, or a mixture of at least two of the aforementioned oxidizing agents.

9. The method according to any of the preceding claims, wherein the deposition of the noble metal compound on the treated carbon material takes place in an aqueous medium.

10. The method according to any of the preceding claims, wherein the noble metal is platinum and the platinum compound is a platinum(II) compound or a platinum(IV) compound.

11. The method according to any of the preceding claims, wherein the impregnated carbon material is brought into contact with the reducing agent in an aqueous medium; and/or wherein the reducing agent is formic acid, a metal borohydride, an alkali metal hydride, hydrogen ($H_2$), a metal thiosulfate, an aldehyde, an alcohol, hydrazine, hydrazine hydrate, hydrazine hydrochloride or ascorbic acid or a mixture of at least two of these reducing agents.

12. The method according to any of the preceding claims, wherein the noble-metal-loaded carbon material contains the noble metal in an amount of 5-60 wt.%.

**Revendications**

1. Procédé pour la fabrication d'un catalyseur pour une cellule électrochimique, dans lequel

   - un matériau en carbone poreux graphitisé est traité avec

      - un plasma contenant de l'oxygène ou
      - un milieu aqueux qui contient un agent oxydant, dans lequel la température du milieu aqueux lors du traitement du matériau en carbone poreux graphitisé est de 70 °C à 100 °C,

   - au moins un composé de métal noble est déposé sur le matériau en carbone traité, de sorte qu'un matériau en carbone imprégné est obtenu,
   - le matériau en carbone imprégné est mis en contact avec un agent réducteur, de sorte que le composé de métal noble est réduit en un métal noble métallique et un matériau en carbone chargé de métal noble est obtenu.

2. Procédé selon la revendication 1, dans lequel le matériau en carbone poreux graphitisé présente un degré de graphitisation d'au moins 60 %, dans lequel le degré de graphitisation g est déterminé au moyen de la formule (1) suivante :

$$g = [(344 \text{ pm} - d_{002}) / (344 \text{ pm} - 335{,}4 \text{ pm})] \times 100 \quad (1)$$

dans lequel $d_{002}$ représente la distance entre les plans basaux du graphite, laquelle est déterminée par diffraction par les poudres au moyen de l'indice de réfraction du plan (002) ; et/ou le matériau en carbone poreux graphitisé présente un rapport La/Lc d'au moins 0,15 déterminé par diffraction par les poudres, dans lequel La représente la taille des cristallites moyenne dans la direction parallèle aux plans basaux de la structure du graphite et Lc représente la taille des cristallites moyenne dans la direction perpendiculaire aux plans basaux de la structure du graphite.

3. Procédé selon l'une des revendications précédentes, dans lequel le matériau en carbone poreux graphitisé présente une surface BET spécifique, déterminée avec de l'azote à 77 K conformément à la norme ISO 9277:2010, dans la plage de 5 $m^2$/g à 200 $m^2$/g et/ou un volume de pores, déterminé par porosimétrie au mercure conformément à la norme ISO 15901-1:2016, dans la plage de 0,7 $cm^3$/g à 3,5 $cm^3$/g.

**4.** Procédé selon l'une des revendications précédentes, dans lequel le matériau en carbone poreux graphitisé est obtenu ou peut être obtenu par la conversion d'un composé polyhydroxylé en un matériau en carbone carbonisé par carbonisation et par la graphitisation du matériau en carbone carbonisé.

**5.** Procédé selon la revendication 4, dans lequel le composé polyhydroxylé est un saccharide, un alcool polyvinylique ou une résine phénolique.

**6.** Procédé selon la revendication 4 ou 5, dans lequel le matériau en carbone poreux graphitisé est obtenu ou peut être obtenu par un procédé qui comprend les étapes suivantes :

- un matériau solide inorganique poreux est imprégné avec le composé polyhydroxylé,
- le composé polyhydroxylé présent dans le matériau solide inorganique poreux est carbonisé, de sorte qu'un matériau en carbone carbonisé est obtenu,
- le matériau solide inorganique est éliminé,
- le matériau en carbone carbonisé exposé par l'élimination du matériau solide inorganique est graphitisé.

**7.** Procédé selon l'une des revendications précédentes, dans lequel un gaz comportant une teneur en oxygène d'au moins 20 % en volume, de préférence d'au moins 95 % en volume, est utilisé pour la génération du plasma contenant de l'oxygène.

**8.** Procédé selon l'une des revendications 1 à 6, dans lequel l'agent oxydant présent dans le milieu aqueux est $HNO_3$, $H_2SO_4$, un permanganate, $H_2O_2$, ou un mélange d'au moins deux desdits agents oxydants susmentionnés.

**9.** Procédé selon l'une des revendications précédentes, dans lequel le dépôt du composé de métal noble sur le matériau en carbone traité est effectué dans un milieu aqueux.

**10.** Procédé selon l'une des revendications précédentes, dans lequel le métal noble est du platine et le composé de platine est un composé de platine(II) ou un composé de platine(IV).

**11.** Procédé selon l'une des revendications précédentes, dans lequel le matériau en carbone imprégné est mis en contact avec l'agent réducteur dans un milieu aqueux ; et/ou dans lequel l'agent réducteur est de l'acide formique, un borohydrure de métal, un hydrure de métal alcalin, de l'hydrogène ($H_2$), un thiosulfate de métal, un aldéhyde, un alcool, de l'hydrazine, de l'hydrate d'hydrazine, de l'hydrochlorure d'hydrazine ou de l'acide ascorbique ou un mélange d'au moins deux desdits agents réducteurs.

**12.** Procédé selon l'une des revendications précédentes, dans lequel le matériau en carbone chargé de métal noble contient le métal noble dans une quantité de 5 à 60 % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2954951 A1
- US 2009208780 A1
- DE 102010049249 A1
- EP 1760810 A1
- EP 2528879 B1

**In der Beschreibung aufgeführte Nicht-Patentliteratur**

- PEM Fuel Cell Electrocatalysts and Catalyst Layers. Springer Verlag, 2008, 110-115
- **J. YU.** *Accounts of Chemical Research,* 2013, vol. 46, 1397-1406
- **P. STRASSER et al.** *ChemPhysChem,* 2012, vol. 13, 1385-1394
- **CH. NEUMANN et al.** *Journal of Materials Chemistry,* 2012, vol. 22, 10787-10794
- **C. ZHANG et al.** *Catalysts,* 2016, vol. 6, 197
- **C. LIU et al.** *J. Mater. Chem. A,* 2017, vol. 5, 1808-1825
- **H.B. BÖHM et al.** *Pure & Appl. Chem,* 1995, vol. 67, 473-506
- **GASTEIGER et al.** *Journal of The Electrochemical Society,* 2018, vol. 165 (16), F1349-F1357